# EUROPÄISCHE PATENTSCHRIFT

(11) **EP 3 795 618 B1**
(45) Veröffentlichungstag und Bekanntmachung des Hinweises auf die Patenterteilung: **28.05.2025**
(21) Anmeldenummer: 20192773.8
(22) Anmeldetag: 25.08.2020
(51) Int. Cl.: C08J 5/18, C09D 127/06, D06N 3/14, D06N 3/00, D06N 3/06

(54) **VERFAHREN ZUR HERSTELLUNG EINES ATMUNGSAKTIVEN FILMS**
METHOD FOR MAKING A BREATHABLE FILM
PROCÉDÉ DE FABRICATION D'UNE FEUILLE RESPIRANTE

(30) Priorität: 20.09.2019 DE 102019214338
(43) Veröffentlichungstag der Anmeldung: 24.03.2021
(73) Patentinhaber: Benecke-Kaliko AG, 30419 Hannover (DE)
(72) Erfinder: Heckel, Andreas, 30419 Hannover (DE); Kammerer, Birgit, 30419 Hannover (DE); Neumann, Thorsten, 30419 Hannover (DE)
(74) Vertreter: Continental Corporation

(56) Entgegenhaltungen:
- EP-B1- 2 918 629
- WO-A1-2009/067384
- DATABASE WPI Week 199835, 1998 Derwent World Patents Index; AN 1998-412099, XP002801676
- DATABASE WPI Week 198840, 1988 Derwent World Patents Index; AN 1988-282688, XP002801677

## Beschreibung

Die Erfindung betrifft ein Verfahren zur Herstellung eines atmungsaktiven Films auf Basis von Polyvinylchlorid (PVC).

Filme auf Basis von PVC werden beispielsweise im Rahmen der Herstellung von Kunstleder verwendet, bei denen in der Regel ein Verbund aus textilen bzw. Glas- oder Carbonfasergeweben, Gewirken, polymeren Schäumen oder Vliesstoffen mit einer Beschichtung aus einem derartigen PVC-Film versehen wird. Diese Beschichtungen können je nach Anwendungsfall kompakt oder geschäumt ausgeführt werden und zum Beispiel durch Prägen eine genarbte Oberfläche aufweisen, sodass sie einer Lederstruktur nachgebildet sind.

Sofern der Film auf Basis von PVC atmungsaktive Eigenschaften aufweisen soll, was zum Beispiel bei Verwendung im Rahmen eines Sitzbezuges oder Schuhobermaterials sowie bei Wand- und Deckenverkleidungen von Vorteil ist, um den Durchtritt von Wasserdampf zu ermöglichen, muss der Film eine ausreichende Anzahl von Poren aufweisen, durch die der Wasserdampf hindurchtreten kann.

Im Sinne dieser Erfindung werden atmungsaktive Eigenschaften gleichbedeutend mit kombinierter Luft- und Feuchtigkeitsdurchlässigkeit angesehen. Eine Vielzahl von Vorschlägen aus dem Stand der Technik beschreibt jedoch Atmungsaktivität lediglich im Hinblick auf gegebene Wasserdampfdurchlässigkeit, nicht jedoch auf zusätzlich vorhandene Fähigkeit zum Luftaustausch. Darunter fallen beispielsweise Dünnstbeschichtungen aus Polyurethan-, Polyester-, Polyethylenglykolfilmen oder ähnliches.

Aus dem Stand der Technik ist es bekannt, an sich nicht atmungsaktive Filme auf Basis von PVC zum Beispiel mittels Nadeln atmungsaktiv auszugestalten, d. h. die Poren werden anschließend mechanisch eingebracht. Dies bringt jedoch unerwünscht zusätzliche Arbeitsschritte mit sich, überdies werden relativ große Poren erzeugt, die an der Oberfläche unschön in Erscheinung treten.

Aus der EP 2 918 629 B1 ist ein gattungsgemäßes Verfahren zur Herstellung eines atmungsaktiven Films auf Hybridbasis aus PVC und Polyurethan beschrieben, welches zum Aufbau von Kunstlederkonstruktionen genutzt werden kann.

Problematisch bei den bislang bekannten atmungsaktiven Filmen ist es, dass mit diesen, sofern eine ausreichende Atmungsaktivität gegeben ist, hohe Ansprüche an die Flammschutzeigenschaften, wie Elektrobrenner M1, M2 und M3 (NF P 92-503), (PDF-P-89 M 1, M2 und M3), Kantenbeflammung nach DIN 534838-2 und Grib 5 (BS 5852 Nr. 5) nicht erfüllt werden können. Bisherige Konstruktionen sind in Bezug auf die Flammfestigkeit für die Automobilspezifikation FMVSS 302 sowie die Interior Spezifikationen BS-5852 IS-0 und IS1 sowie DIN EN 1021 Teil 1 und Teil 2, welche die Beflammung mit Zigarette und Gasflamme während Zeiträumen von 15 Sekunden und 20 Sekunden auf der Fläche beschreiben, eingestuft. Um höhere Brandschutznormen wie Grib 5 und M1, M2, B1 und B2 zu erfüllen, müssen jedoch grundlegende Rezeptur- und Konstruktionsänderungen durchgeführt werden. Unter anderem erreichen nicht atmungsaktive PVC- und/oder PUR-Konstruktionen diese höheren Brandschutznormen (Schwerentflammbarkeit) durch Einsatz von Flammschutzmittelstoffen und/oder in Kombination mit halogen- und/oder phosphathaltigen Weichmachern bzw. Verbindungen. Die Möglichkeit einer Atmungsaktivität, d. h. Luft- und Feuchtigkeitsdurchlässigkeit in Kombination mit einer Schwerentflammbarkeit und praxisgerechter hoher Abriebfestigkeit ist jedoch im Stand der Technik nicht gegeben.

Aufgabe der Erfindung ist es, ein Verfahren zur Herstellung eines atmungsaktiven Films anzugeben, welcher hoch flammschutzfest, hinreichend atmungsaktiv und hoch abriebfest ausgebildet ist, sodass er sich beispielsweise für den Einsatz im Objektbereich, Wohnbereich, öffentlichen Bereich, in Krankenhäusern sowie im Nautik- und Transportbereich eignet.

Zur Lösung der gestellten Aufgabe wird erfindungsgemäß die Ausgestaltung eines Verfahrens gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag beruht darauf, zur Herstellung des atmungsaktiven Films auf Basis von Polyvinylchlorid (PVC) eine pastöse Masse bereitzustellen, die mindestens eine erste Fraktion aus PVC und eine zweite Fraktion umfasst, die miteinander zu der pastösen Masse vermischt werden, die pastöse Masse anschließend auf eine Unterlage aufgebracht wird und sodann unter Wärmezufuhr durch Trocknen und Ausgelieren zu dem Film ausgebildet wird, wobei von der einen zur anderen Oberfläche des Filmes verlaufende Poren eines mittleren Porendurchmessers von 1 µm bis 1 mm (in situ) gebildet werden, die dem Film Atmungsaktivität mit einer Gasdurchlässigkeit von 0,1 bis 200 l dm⁻² min⁻¹ und einer Wasserdampfdurchlässigkeit von 0,1 bis 200 mg cm⁻² h⁻¹ verleihen, um die gewünschte Luft- und Wasserdampfdurchlässigkeit zu erreichen.

Um dabei die gewünschte hohe Flammschutzfestigkeit sowie Abriebfestigkeit zu erreichen, wird insoweit erfindungsgemäß vorgeschlagen, die erste Fraktion aus einem Pasten-PVC sowie schwerentflammbaren Additiven und/oder Weichmachern zu bilden und die zweite Fraktion aus einer wässrigen PVC-Dispersion zu bilden, die außer Wasser keine zusätzlichen Lösungsmittel aufweist.

Im Rahmen der Erfindung wurde festgestellt, dass ein aus einer solchen pastösen Masse auf Basis von Pasten-PVC mit schwerentflammbaren Additiven und/oder Weichmachern sowie einer wässrigen PVC-Dispersion hergestellter atmungsaktiver Film trotz der gewünschten durchgängigen Porenausbildung für gute Luft- und Wasserdampfdurchlässigkeit höchste Anforderungen an die Schwerentflammbarkeit sowie Abriebfestigkeit erfüllt, sodass er sich für den Einsatz in Automobil- und anderen FahrzeugInnenräumen, im Objektbereich und dergleichen hervorragend eignet.

Nach einem Vorschlag der Erfindung werden als erste Fraktion Emulsions-PVC oder Mikrosuspension-PVC mit einem K-Wert von 63 bis 90 oder Abmischungen derselben verwendet, die auf Basis von PVC-Homopolymeren, PVC-Copolymeren, PVC-Vinylacetaten und/oder PVC-Acrylaten ausgebildet sein können.

Als schwerentflammbare Weichmacher für den Einsatz in der ersten Fraktion eignen sich nach einem Vorschlag der Erfindung solche, die zu den Klassen der phosphorhaltigen, stickstoffhaltigen, halogen- und/oder sulfathaltigen Weichmacher gehören. Abmischungen mit Polymer-, Phtalat-, Adipat- oder Trimellitatweichmachern sowie nachhaltigen Weichmachern auf Basis von Sojaölen, Sebazaten, Rizinusölen oder Glykolen sind im Rahmen der Erfindung ebenfalls möglich. Der Anteil an schwerentflammbaren Weichmachern innerhalb der ersten Fraktion liegt bevorzugt im Bereich von 40 bis 160 phr (parts per hundred) und wird auf 100 Teile Pasten-PVC der ersten Fraktion bezogen. Durch den insoweit variablen Anteil von Weichmachern im Bereich von 40 bis 160 phr kann die Weichheit, Festigkeit und Dehnbarkeit, Flexibilität und Kältestabilität des resultierenden atmungsaktiven Films als einzelne Schicht bzw. im Rahmen eines Verbundes, in dem der atmungsaktive Film als mindestens eine Schicht verwendet wird, in weiten Grenzen eingestellt werden.

Die erste Fraktion, basierend auf einem Pasten-PVC, enthält erfindungsgemäß auch schwerentflammbare Additive, zu denen erfindungsgemäß beispielsweise phosphor- und/oder stickstoffhaltige Feststoffe, z.B. Ammoniumpolyphosphate, Melamincyanorate und Melamine sowie Füllstoffe auf Basis von Aluminium- und Magnesiumverbindungen, Ammoniumsalzen, polymeren Phosphaten, Boraten, Zinksalzen, Molybdän- und Antimonverbindungen und/oder Zinnverbindungen gezählt werden. Ferner gehören diesen Verbindungen auch Zeolithe, Tonerden sowie thermisch leitfähige Verbindungen, wie Nitride, Carbide, zum Beispiel Bornitride, Silizium Carbide etc. an. Intumeszenz-Flammschutzmittel, wie beispielsweise Blähgraphit können erfindungsgemäß ebenfalls einzelnen oder in Kombination zum Einsatz kommen, wobei erfindungsgemäß vorgesehen ist, den Feststoffgehalt auf etwa 0 bis 70 phr, vorzugsweise 0 bis 45 phr, jeweils bezogen auf 100 Teile Pasten-PVC der ersten Fraktion einzustellen.

Darüber hinaus kann erfindungsgemäß die erste Fraktion als schwerentflammbare Additive auch Stabilisatoren auf Basis von Uracil, Perchlorat, Barium, Kalzium, Zink, Zinn, Epoxid und oder Betadiketon in flüssigem oder festem Aggregatzustand umfassen. Zusätzlich können auch geblockte Phenolverbindungen oder Abmischungen derselben eingesetzt werden. Diese Stabilisatoren werden bevorzugt in einer Gesamtmenge von etwa 0,5 bis 20 phr, bezogen auf 100 Teile Pasten-PVC der ersten Fraktion eingesetzt.

Ein bevorzugtes Mischungsverhältnis der pastösen Masse aus erster und zweiter Fraktion gemäß dieser Erfindung umfasst etwa 5 bis 50 Gew.-% der ersten Fraktion und entsprechend 95 bis 50 Gew.-% der zweiten Fraktion, sodass eine Gesamtsumme der ersten und zweiten Fraktion von 100 Gew.-% erreicht wird.

Im Rahmen der Erfindung wird insbesondere vorgeschlagen, die zweite Fraktion aus einer wässrigen PVC-Dispersion mit einem K-Wert von 58 bis 80 zu bilden, wobei die Partikelgrößen der in der wässrigen PVC-Dispersion eingesetzten PVC-Partikel in einem Bereich von 20 nm bis 60 µm, vorzugsweise 50 bis 1000 nm liegen.

Die wässrige PVC-Dispersion der zweiten Fraktion weist darüber hinaus bevorzugt einen Feststoffgehalt der eingesetzten PVC-Partikel von etwa 5 bis 65 %, vorzugsweise 30 bis 60 % auf und enthält - außer Wasser - keine weiteren Lösungsmittel und trägt wesentlich zur schwerentflammbaren Materialeigenschaft des erhaltenen atmungsaktiven Films bei.

Darüber hinaus bilden die in der wässrigen PVC-Dispersion enthaltenen Seifen und ionischen Gruppen gegenüber dem Pasten-PVC der ersten Fraktion inkompatible Grenzflächen aus, die bei der infolge von Wärmezufuhr erfolgenden Verdampfung des enthaltenen Wassers die gewünschten Poren im atmungsaktiven Film zur Erzielung der spezifizierten Gas- und Wasserdampfdurchlässigkeit ausbilden.

Nach einem weiteren Vorschlag der Erfindung kann die Rezeptur der pastösen Masse zur Herstellung des atmungsaktiven Films neben den vorangehend erläuterten und insoweit mindestens enthaltenen ersten und zweiten Fraktionen auch eine dritte Fraktion enthalten, die auf Basis von Polyether-, Polyester- oder Polycarbonat-Polyurethan oder Abmischungen derselben gebildet ist und bezogen auf die Gesamtmenge aus der ersten und zweiten Fraktion in einer Menge von bis zu 50 Gew.-% der pastösen Masse beigemischt werden kann.

Der Feststoffanteil der dritten Fraktion beläuft sich nach einem Vorschlag der Erfindung auf etwa 5 bis 65 %, vorzugsweise 30 bis 60 %.

Die dritte Fraktion kann alternativ oder zusätzlich auch thermoplastisches Polyurethan (TPU) umfassen, welches als Pulver mit einer durchschnittlichen Korngröße (Feinheit) von 50 nm bis 120 µm, vorzugsweise 50 nm bis 60 µm eingesetzt wird. Dieses TPU-Polymer kann als Polyether, Polyester oder als Polycarbonat vorliegen.

Zusätzlich kann die dritte Fraktion auch entsprechende Vernetzer aufweisen, welche in Gewichtsanteilen im Bereich von 0 bis 20 phr, vorzugsweise 0 bis 8 phr, jeweils bezogen auf 100 Teile Polyurethan der dritten Fraktion, eingesetzt werden können. Diese Vernetzer können beispielsweise aus Isocyanaten, Carbodiimiden, Melaminen, Epoxiden und/oder Azeridinen ausgewählt sein.

Zusätzlich oder alternativ zur dritten Fraktion kann die Rezeptur der erfindungsgemäßen pastösen Masse zur Herstellung des atmungsaktiven Films neben den mindestens enthaltenen ersten und zweiten Fraktionen auch eine vierte Fraktion umfassen, die farbgebende Substanzen, wie Cool-Color-Pigmente, anorganische und organische Pigmente, Ruße, Quantumdots und/oder Effekte Pigmente in einer Menge von etwa 0 bis 40 phr, insbesondere 2 bis 30 phr, bezogen auf 100 Teile PVC der ersten Fraktion enthält. Die Menge der eingesetzten vierten Fraktion auf Basis farbgebender Substanzen kann erfindungsgemäß bis zu 30 Gew.-%, bezogen auf die Gesamtmenge aus der ersten und zweiten sowie ggf. dritten Fraktion, umfassen.

Die Herstellung der im Rahmen der Erfindung bereitgestellten pastösen Masse umfasst das Homogenisieren aller Fraktionen mittels Durchmischen und Dispergieren in einem geeigneten Gefäß, wodurch eine streichfähige Paste erhalten wird, deren Viskosität durch Füllstoffe, verwendete PVC-Typen, Weichmacheranteil, Dispersionsanteile sowie die Partikelgrößen bestimmt wird und bevorzugt auf eine Viskosität von etwa 5 bis 500 Poise (0 bis 10⁴ mPas) eingestellt wird.

Die solchermaßen hergestellte pastöse Masse ist streichfähig und kann auf einer bereitgestellten Unterlage zum Beispiel mittels eines Reverse- bzw. Rollcoaters mittels Rakeln, Sprühen oder Drucken aufgebracht werden, und zwar bevorzugt mit einem Flächengewicht von etwa 10 bis 800 g/m².

Als Unterlage eignet sich etwa ein sogenannter Release Liner, zum Beispiel aus Silikon, Olefin, PET etc. oder auf Basis eines Papiers mit Silikon-, Chromstearat-, Polyolefin- oder Acrylatfinish sowie eine Metallfolie o. ä.

Durch anschließendes Ausheizen und Trocknen bzw. Gelieren der auf der Unterlage aufgebrachten pastösen Masse gemeinsam mit der Unterlage unter Wärmezufuhr bei Temperaturen zwischen 70 und 250 °C, vorzugsweise 80 bis 200 °C etwa in einem Trockenofen, der von der auf der Unterlage aufgebrachten pastösen Masse durchlaufen wird, wird der gewünschte atmungsaktive Film mit gewünschter Porengröße und -anzahl ausgebildet.

Die Unterlage kann nach der Ausbildung des Films entweder von diesem abgezogen werden oder wird von einem Substrat gebildet, welches nach Ausbildung des Films an diesem verbleibt.

Mit dem erfindungsgemäßen Verfahren ist es möglich, mindestens eine Schicht aus einem solchermaßen hergestellten atmungsaktiven Film herzustellen, was beispielsweise zur Herstellung von Kunstleder dienen kann, bei welchem auf einem textilen Träger eine Deckschicht aus einem erfindungsgemäßen atmungsaktiven Film aufgebracht wird.

Es ist jedoch auch möglich, den erfindungsgemäßen atmungsaktiven Film in einem Mehrschichtverbundsystem in einer einzelnen Schicht oder mehreren Schichten vorzusehen.

Ein Mehrschichtverbundsystem dieser Art kann einen textilen Träger aus einem Gewebe, Gewirk oder Gestrick aufweisen, auf den der atmungsaktive Film gemäß der Erfindung und/oder weitere Schichten beispielsweise durch Flamm- oder Klebekaschierung aufkaschiert werden. Zusätzliche Schichten können retikulierte Schäume, Abstandsgewirke, Abstandsvliese, Glasfasern oder Kohlefasern beinhalten. Die textilen Träger können auf Basis von Polymeren, wie Polyurethan, Polyester, Nitride, Polyamid, Zellulose, Viskose, Wolle oder Silikonen beruhen.

Zur Herstellung abriebfester Oberflächenschichten können diverse Systeme auf Basis von PVC, fluorierten Komponenten, Acrylaten, Polyurethanen inklusive UV-härtbarer Lacke und Digitaldruckschichten eingesetzt werden, die auf den erfindungsgemäßen atmungsaktiven Film aufgebracht werden können.

Durch diverse oberflächliche Lackschichten inklusive UV-härtbare Schichten können die Umweltbeständigkeit gegenüber Licht, Abrieb, Wärme etc. sowie die Haptik und Optik eingestellt werden sowie weitere Eigenschaften, wie Hautpflege und UV-Schutz, Insektizide und Insektenschutzmittel eingearbeitet bzw. verliehen werden.

Durch Anwendung geeigneter Verfahren, wie Stahl- und Keramikprägen, Vakuumprägen, Silikon-Tuch-Walzenprägen und dergleichen kann der erfindungsgemäße atmungsaktive Film oder ein unter Einsatz dieses atmungsaktiven Films ausgebildeter Mehrschichtverbund oberflächlich im Bereich seiner Sichtseite strukturiert werden, etwa um eine Ledernarbstruktur einzubringen.

Der vorangehend erläuterte erfindungsgemäße atmungsaktive Film eignet sich von daher insbesondere zur Ausbildung von Kunstleder, eröffnet aber auch mögliche Anwendungen im Objektbereich, zum Beispiel Wand- und Deckenbespannungen und dergleichen mehr (Living Solutions) auszubilden, die nicht nur eine hervorragende Atmungsaktivität im Hinblick auf Luft- und gleichzeitige Wasserdampfdurchlässigkeit aufweisen, sondern darüber hinaus auch hoch abriebfest und besonders schwerentflammbar ausgebildet sind.

So konnte im Rahmen eines Ausführungsbeispieles ein atmungsaktiver Film erhalten werden, der eine Atmungsaktivität gegenüber Luft von mindestens 10 l/min/dm² sowie eine Wasserdampfdurchlässigkeit von 5 mg/h/cm² bei einem Martindale Abrieb (Cotton Duck) 10 von 400k Touren und eine Flexibilität von 200 kT bei RT aufwies und die Brennbarkeitskriterien M1-3, Grib 5, Kanten- und Flächenbeflammung problemlos erfüllte.

Insbesondere hat sich im Rahmen der Erfindung gezeigt, dass bei Ausrüstung eines Bezugsmaterials aus dem erfindungsgemäßen atmungsaktiven Film eine herausragende Unempfindlichkeit und Resistenz gegenüber Entzündung mittels Zigaretten erzielt wird, die insbesondere für den Einsatz in öffentlichen Verkehrsmitteln, Wartebereichen und dergleichen besonders prädestiniert ist.

## Patentansprüche

1. Verfahren zur Herstellung eines atmungsaktiven Films auf Basis von Polyvinylchlorid (PVC), umfassend die Schritte:
- Bereitstellen einer pastösen Masse, mindestens umfassend eine erste Fraktion aus PVC und eine zweite Fraktion, die miteinander zu der pastösen Masse vermischt werden;
- Aufbringen der pastösen Masse auf eine Unterlage;
- Trocknen und Ausgelieren der auf die Unterlage aufgebrachten pastösen Masse unter Wärmezufuhr zu dem Film, wobei von der einen zur anderen Oberfläche des Filmes verlaufende Poren eines mittleren Porendurchmessers von 1 µm bis 1 mm gebildet werden, die dem Film Atmungsaktivität mit einer Gasdurchlässigkeit von 0,1 bis 200 l dm⁻² min⁻¹ und einer Wasserdampfdurchlässigkeit von 0,1 bis 200 mg cm⁻² h⁻¹ verleihen;
**dadurch gekennzeichnet, dass** die erste Fraktion aus einem Pasten-PVC sowie schwerentflammbaren Additiven und/oder Weichmachern gebildet ist und die zweite Fraktion eine wässrige PVC-Dispersion umfasst.

2. Verfahren nach Anspruch 1, **dadurch gekennzeichnet, dass** die erste Fraktion Emulsions-PVC oder Mikrosuspensions-PVC mit einem K-Wert von 63 bis 90 oder Abmischungen derselben auf Basis von PVC-Homopolymeren, PVC-Copolymeren, PVC-Vinylacetaten und/oder PVC-Acrylaten umfasst.

3. Verfahren nach einem der Ansprüche 1 oder 2, **dadurch gekennzeichnet, dass** die erste Fraktion als schwerentflammbare Weichmacher phosphor-, stickstoff-, halogen- und/oder sulfathaltige Weichmacher mit oder ohne Zusatz von Polymer-, Phtalat-, Adipat- oder Trimellitatweichmachern oder Weichmachern auf Basis von Sojaöl, Sebazaten, Rhizinusöl oder Glykolen in einer Gesamtmenge von 40 bis 160 phr (parts per hundred), bezogen auf 100 Teile Pasten-PVC der ersten Fraktion enthält.

4. Verfahren nach einem der Ansprüche 1 bis 3, **dadurch gekennzeichnet, dass** die erste Fraktion als schwerentflammbare Additive phosphor- und/oder stickstoffhaltige Feststoffe und Füllstoffe auf Basis von Aluminium- und Magnesiumverbindungen, Ammoniumsalzen, polymeren Phosphaten, Boraten, Zinksalzen, Molybdän- und Antimonverbindungen und/oder Zinnverbindungen, Zeolithe, Tonerden, elektrisch leitfähige Verbindungen und/oder Intumeszenz-Flammschutzmittel einzeln oder in Kombination derselben mit einem Feststoffgehalt von 0 bis 70 phr, bezogen auf 100 Teile Pasten-PVC der ersten Fraktion enthält .

5. Verfahren nach einem der Ansprüche 1 bis 4, **dadurch gekennzeichnet, dass** die erste Fraktion als schwerentflammbare Additive Stabilisatoren auf Basis von Uracil, Perchlorat, Barium, Calcium, Zink, Zinn, Epoxid und/oder Betadiketon in fester oder flüssiger Form und/oder geblockte Phenolverbindungen oder Abmischungen derselben in einer Gesamtmenge von 0,5 bis 20 phr, bezogen auf 100 Teile Pasten-PVC der ersten Fraktion enthält.

6. Verfahren nach einem der Ansprüche 1 bis 5, **dadurch gekennzeichnet, dass** die pastöse Masse 5 bis 50 Gew.-% der ersten Fraktion und 95 bis 50 Gew. % der zweiten Fraktion umfasst, wobei die Summe der ersten und zweiten Fraktion 100 Gew.-% beträgt.

7. Verfahren nach einem der Ansprüche 1 bis 6, **dadurch gekennzeichnet, dass** die zweite Fraktion einen K-Wert von 58 bis 80 und/oder einen Feststoffgehalt der eingesetzten PVC-Partikel in der Dispersion von 5 bis 65 % aufweist.

8. Verfahren nach einem der Ansprüche 1 bis 7, **dadurch gekennzeichnet, dass** die pastöse Masse eine dritte Fraktion auf Basis von Polyether-, Polyester- oder Polycarbonat-Polyurethanen oder Abmischungen derselben in einer Menge von bis zu 50 Gew.-% bezogen auf die Gesamtmenge aus der ersten und zweiten Fraktion umfasst.

9. Verfahren nach Anspruch 8, **dadurch gekennzeichnet, dass** die dritte Fraktion eine Polyurethandispersion mit einem Feststoffanteil von 5 bis 65 %, vorzugsweise 30 bis 60 %, umfasst.

10. Verfahren nach einem der Ansprüche 8 bis 9, **dadurch gekennzeichnet, dass** die dritte Fraktion Vernetzer, ausgewählt aus Isocyanaten, Carbodiimiden, Melaminen, Epoxiden und/oder Azeridinen in einer Menge von bis zu 20 phr, bezogen auf 100 Teile der dritten Fraktion enthält.

11. Verfahren nach einem der Ansprüche 1 bis 10, **dadurch gekennzeichnet, dass** die pastöse Masse eine vierte Fraktion auf Basis farbgebender Substanzen in einer Menge von bis zu 30 Gew.-%, bezogen auf die Gesamtmenge aus der ersten und zweiten sowie ggf. dritten Fraktion umfasst.

12. Verfahren nach einem der Ansprüche 1 bis 11, **dadurch gekennzeichnet, dass** das Trocknen und Ausgelieren der pastösen Masse zu dem Poren aufweisenden Film unter Wärmezufuhr bei Temperaturen zwischen 70 °C und 250 °C erfolgt.

13. Verfahren nach einem der Ansprüche 1 bis 12, **dadurch gekennzeichnet, dass** die Unterlage nach der Ausbildung des Films von diesem abgezogen wird oder von einem Substrat gebildet wird, welches nach Ausbildung des Films an diesem verbleibt.

## Claims

1. Process for producing a breathable film based on polyvinyl chloride (PVC) comprising the steps of:
- providing a pasty mass at least comprising a first fraction of PVC and a second fraction, which are mixed with one another to afford the pasty mass;
- applying the pasty mass to a support;
- drying and gelling the pasty mass applied to the support, with supply of heat to the film, forming pores of an average pore diameter of 1 µm to 1 mm from one surface of the film to the other, which give the film breathability with a gas permeability of 0.1 to 200 l dm⁻² min⁻¹ and a water vapour permeability of 0.1 to 200 mg cm⁻² h⁻¹;
**characterized in that** the first fraction is formed of a paste PVC and low-flammability additives and/or plasticizers and the second fraction comprises an aqueous PVC dispersion.

2. Process according to Claim 1, **characterized in that** the first fraction comprises emulsion PVC or microsuspension PVC having a K value of 63 to 90 or blends thereof based on PVC homopolymers, PVC copolymers, PVC vinyl acetates and/or PVC acrylates.

3. Process according to any of Claims 1 or 2, **characterized in that** the first fraction comprises, as low-flammability plasticizers, phosphorus-, nitrogen-, halogen- and/or sulfate-containing plasticizers with or without addition of polymer, phthalate, adipate or trimellitate plasticizers or plasticizers based on soyabean oil, sebacates, castor oil or glycols in a total amount of 40 to 160 phr (parts per hundred), based on 100 parts of paste PVC of the first fraction.

4. Process according to any of Claims 1 to 3, **characterized in that** the first fraction comprises, as low-flammability additives, phosphorus- and/or nitrogen-containing solids and fillers based on aluminium and magnesium compounds, ammonium salts, polymeric phosphates, borates, zinc salts, molybdenum and antimony compounds and/or tin compounds, zeolites, clays, electrically conductive compounds and/or intumescent flame retardants individually or in combination thereof, having a solids content of 0 to 70 phr, based on 100 parts of paste PVC of the first fraction.

5. Process according to any of Claims 1 to 4, **characterized in that** the first fraction comprises, as low-flammability additives, stabilizers based on uracil, perchlorate, barium, calcium, zinc, tin, epoxide and/or beta-diketone in solid or liquid form and/or blocked phenol compounds or blends thereof in a total amount of 0.5 to 20 phr, based on 100 parts of paste PVC of the first fraction.

6. Process according to any of Claims 1 to 5, **characterized in that** the pasty mass comprises 5% to 50% by weight of the first fraction and 95% to 50% by weight of the second fraction, where the sum of the first and second fractions is 100% by weight.

7. Process according to any of Claims 1 to 6, **characterized in that** the second fraction has a K value of 58 to 80 and/or a solids content of the PVC particles used in the dispersion of 5% to 65%.

8. Process according to any of Claims 1 to 7, **characterized in that** the pasty mass comprises a third fraction based on polyether, polyester or polycarbonate polyurethanes or blends thereof in an amount of up to 50% by weight based on the total amount of the first and second fractions.

9. Process according to Claim 8, **characterized in that** the third fraction comprises a polyurethane dispersion having a solids content of 5% to 65%, preferably 30% to 60%.

10. Process according to any of Claims 8 to 9, **characterized in that** the third fraction comprises crosslinkers selected from isocyanates, carbodiimides, melamines, epoxides and/or azeridines in an amount of up to 20 phr, based on 100 parts of the third fraction.

11. Process according to any of Claims 1 to 10, **characterized in that** the pasty mass comprises a fourth fraction based on colouring substances in an amount of up to 30% by weight, based on the total amount of the first and second fractions and also, where present, the third fraction.

12. Process according to any of Claims 1 to 11, **characterized in that** the drying and gelling of the pasty mass to afford the pore-containing film takes place with supply of heat at temperatures between 70°C and 250°C.

13. Process according to any of Claims 1 to 12, **characterized in that** the support is removed from the film after the formation of the film or is formed from a substrate which remains on the film after formation of the film.

## Revendications

1. Procédé de fabrication d'un film respirant à base de poly(chlorure de vinyle) (PVC), comprenant les étapes :
- mise à disposition d'une masse pâteuse comprenant au moins une première fraction à base de PVC et une deuxième fraction, qui sont mélangées l'une avec l'autre pour former la masse pâteuse ;
- application de la masse pâteuse sur un support ;
- séchage et gélification complète de la masse pâteuse appliquée sur le support, avec apport de chaleur, conduisant au film, des pores s'étendant d'une surface à l'autre du film, d'un diamètre moyen de pore moyen de 1 µm à 1 mm, étant formés, qui confèrent au film une respirabilité avec une perméabilité aux gaz de 0,1 à 200 l dm⁻² min⁻¹ et une perméabilité à la vapeur d'eau de 0,1 à 200 mg cm⁻² h⁻¹ ;
**caractérisé en ce que** la première fraction est constituée d'un PVC en pâte ainsi que d'additifs et/ou de plastifiants, difficilement inflammables, et la deuxième fraction comprend une dispersion aqueuse de PVC.

2. Procédé selon la revendication 1, **caractérisé en ce que** la première fraction comprend du PVC en émulsion ou du PVC en microsuspension ayant un indice K de 63 à 90 ou des mélanges de ceux-ci à base d'homopolymères de PVC, de copolymères de PVC, de PVC-acétates de vinyle et/ou de PVC-acrylates.

3. Procédé selon la revendication 1 ou 2, **caractérisé en ce que** la première fraction contient en tant que plastifiants difficilement inflammables des plastifiants phosphorés, azotés, halogénés et/ou sulfatés avec ou sans addition de plastifiants polymères, phtalate, adipate ou trimellitate ou de plastifiants à base d'huile de soja, de sébaçates, d'huile de ricin ou de glycols en une quantité totale de 40 à 160 phr (parts per hundred), par rapport à 100 parties de PVC en pâte de la première fraction.

4. Procédé selon l'une quelconque des revendications 1 à 3, **caractérisé en ce que** la première fraction contient en tant qu'additifs difficilement inflammables des matières solides phosphorées et/ou azotées et des charges à base de composés d'aluminium et de magnésium, de sels d'ammonium, de phosphates polymères, de borates, de sels de zinc, de composés d'antimoine et de molybdène et/ou de composés d'étain, de zéolithes, de composés électriquement conducteurs et/ou d'agents ignifuges intumescents, seuls ou en association de ceux-ci, avec une teneur en matières solides de 0 à 70 phr par rapport à 100 parties de PVC en pâte de la première fraction.

5. Procédé selon l'une quelconque des revendications 1 à 4, **caractérisé en ce que** la première fraction contient en tant qu'additifs difficilement inflammables des stabilisants à base d'uracile, de perchlorate, de baryum, de calcium, de zinc, d'étain, d'époxyde et/ou de bêta-dicétone, sous forme solide ou liquide et/ou de composés phénoliques bloqués ou de mélanges de ceux-ci en une quantité totale de 0,5 à 20 phr, par rapport à 100 parties de PVC en pâte de la première fraction.

6. Procédé selon l'une quelconque des revendications 1 à 5, **caractérisé en ce que** la masse pâteuse comprend 5 à 50 % en poids de la première fraction et 95 à 50 % en poids de la deuxième fraction, la somme de la première et de la deuxième fraction étant égale à 100 % en poids.

7. Procédé selon l'une quelconque des revendications 1 à 6, **caractérisé en ce que** la deuxième fraction présente un indice K de 58 à 80 et/ou une teneur en matière solide des particules de PVC utilisées dans la dispersion de 5 à 65 % en poids.

8. Procédé selon l'une quelconque des revendications 1 à 7, **caractérisé en ce que** la masse pâteuse comprend une troisième fraction à base de polyéther-, polyester- ou polycarbonate-polyuréthanes ou de mélanges de ceux-ci en une quantité de jusqu'à 50 % en poids par rapport à la quantité totale de la première et de la deuxième fraction.

9. Procédé selon la revendication 8, **caractérisé en ce que** la troisième fraction comprend une dispersion de polyuréthane ayant une proportion de matière solide de 5 à 65 %, de préférence 30 à 60 %.

10. Procédé selon l'une quelconque des revendications 8 et 9, **caractérisé en ce que** la troisième fraction contient des agents de réticulation, choisis parmi les isocyanates, carbodiimides, mélamines, époxydes et/ou azétidines, en une quantité de jusqu'à 20 phr, par rapport à 100 parties de la troisième fraction.

11. Procédé selon l'une quelconque des revendications 1 à 10, **caractérisé en ce que** la masse pâteuse comprend une quatrième fraction à base de substances colorantes en une quantité de jusqu'à 30 % en poids, par rapport à la quantité totale de la première et de la deuxième ainsi qu'éventuellement de la troisième fraction.

12. Procédé selon l'une quelconque des revendications 1 à 11, **caractérisé en ce que** le séchage et la gélification complète de la masse pâteuse conduisant au film comportant des pores, avec apport de chaleur, s'effectue à des températures comprises entre 70 °C et 250 °C.

13. Procédé selon l'une quelconque des revendications 1 à 12, **caractérisé en ce que** le support est retiré du film après la formation de ce dernier ou est constitué d'un substrat qui reste sur le film après la formation de ce dernier.
